# EUROPEAN PATENT SPECIFICATION

(11) **EP 2 792 898 B1**
(45) Date of publication and mention of the grant of the patent: **27.07.2016**
(21) Application number: 14001414.3
(22) Date of filing: 17.04.2014
(51) Int. Cl.: F16D 41/28

(54) **Hub assembly for bicycle or the like wheel, method of assembling and maintenance of the same**
Nabe für Fahrrad, Verfahren zur Montage und Wartung der Nabe
Moyeu de bicyclette, procédé de montage et maintenance pour ladit moyeu

(30) Priority: 18.04.2013 IT PD20130100; 16.04.2014 IT VI20140114
(43) Date of publication of application: 22.10.2014
(73) Proprietor: Brega S.R.L., 35030 Cervarese Santa Croce (IT)
(72) Inventor: Gavasso, Riccardo, 35030 Cervarese Santa Croce (Padova) (IT)
(74) Representative: Maroscia, Antonio

(56) References cited:
- EP-A1- 0 695 886
- EP-A1- 2 020 520
- US-A- 3 709 341

## Description

### Field of the Invention

The present invention generally finds application in the field of pedal-powered vehicles and particularly relates to a hub assembly for the wheel of a bicycle or the like.

The invention also relates to a method for quick assembly and quick maintenance of this hub assembly respectively.

### Background art

Hub assemblies for wheels of bicycles or similar vehicles are known, which comprise one or more freewheel bearings adapted to transfer the driving torque applied by the user to the pedals of the vehicle, to the rear wheel.

These bearings are arranged coaxial to the hub body and have a plurality of rollers for promoting one-way transfer of the torque to the rear wheel due to the rotation imparted by the user on the freehub body.

Furthermore, these bearings allow free rotation of the freehub body when the user promotes pedal rotation in a direction of rotation opposite to that of the driving torque.

Therefore, due to the presence of freewheel bearings, when the rider stops or reverses pedal rotation, bicycle riding is not affected.

Also, the freewheel bearings can reduce or eliminate clearance in the rotation of the freehub body when the user reverses pedal rotation.

For example, EP2020520 discloses a hub assembly for bicycle wheels adapted to be fitted in an axle that is removably fixed to a fork of the vehicle.

This assembly comprises a hub body, which is designed to support the wheel spokes, and a hollow cylindrical element, which is connected to one end of such hub body and whose outer surface is designed to interact with the rollers of a pair of freewheel bearings.

Particularly, the outer locknut of the bearings is directly inserted in the central hole of the freehub body.

EP0695886 discloses a hub assembly for bicycle wheels having a hollow and internally threaded hub body for screw coupling of an intermediate cylindrical element which is adapted to support a bushing whose outer surface is designed to interact with the rollers of a pair of freewheel bearings.

Once again the outer locknut of the bearings is directly inserted in the central hole of the freehub body and the latter is held in abutting relationship with the hub body by tightening a pair of nuts for removable fixation of the assembly to the fork of the vehicle frame.

Nevertheless, a first drawback of the above arrangements is that the freewheel bearings are placed at one end of the hub assembly and are more exposed to bending and to the stresses exerted by the wheel as it rotates.

This configuration increases wear of freewheel bearings, and requires more intensive maintenance of the assembly, as well as periodic replacement of bearings.

A further drawback is that bearings are located in the freehub body in a hardly accessible position for the maintenance operator, thereby requiring very long operation times.

Also, any displacement or, in the worst case, failure of the bearings during operation of the assembly might damage the freehub body, which would require replacement like the bearings.

Another drawback is that these assemblies require very complex assembly and mounting procedures, using a special-purpose tool, as well as a particular skill by the operator that will perform assembly/disassembly.

Finally, a further drawback of these assemblies is that the various assembly parts are not easy to hold and this makes them particularly difficult to remove.

### Disclosure of the invention

The object of the present invention is to obviate the above drawbacks, by providing a hub assembly for a wheel of a bicycle or the like, that is highly efficient and relatively cost-effective.

A particular object of the present invention is to provide a hub assembly for a wheel of a bicycle or the like that has improved durability.

Another object of the present invention is to provide a hub assembly for a wheel of a bicycle or the like that requires less maintenance.

A further object of the present invention is to provide a hub assembly for a wheel of a bicycle or the like that is particularly simple and quick to assemble.

Another object of the present invention is to provide a hub assembly for a wheel of a bicycle or the like that can be easily mounted/removed to/from the fork of a bicycle or the like.

A further object of the present invention is to provide a hub assembly for a wheel of a bicycle or the like that requires no special skill of an operator that will perform assembly/disassembly.

Yet another object of the present invention is to provide a hub assembly for a wheel of a bicycle or the like that allows quick and simple removal of its parts.

A further object of the present invention is to provide a hub assembly for a wheel of a bicycle or the like that can be easily used with any type of bicycle, for both city and sports use.

These and other objects, as better explained hereafter, are fulfilled by a hub assembly for a wheel of a bicycle or the like as defined in claim 1.

In another aspect, the invention relates to a method for quick assembly of a hub assembly as defined in claim 10.

In a further aspect, the invention relates to a method for quick maintenance of a hub assembly as defined in claim 11.

Advantageous embodiments of the invention are obtained in accordance with the dependent claims.

### Brief description of the drawings

Further features and advantages of the invention will be more apparent from the detailed description of a preferred, non-exclusive embodiment of a hub assembly for a wheel of a bicycle or the like, of a method for quick mounting and maintenance of a hub assembly of the invention, which are described as a non-limiting example with the help of the annexed drawings, in which:
Fig. 1 is a lateral view of the hub assembly of the invention;
FIG. 2 is a lateral broken-away view of the assembly of Fig. 2;
FIG. 3 is an exploded perpsective view of the assembly of Fig. 1;
FIG. 4 is a partially exploded perpsective view of the assembly of Fig. 1.

### Detailed description of a preferred embodiment

The above mentioned figures show a hub assembly with a freewheel mechanism, generally designated by numeral 1, for use on a wheel of a bicycle or a similar vehicle.

The hub assembly of the invention is generally removably mounted to the front fork F of the bicycle, not shown, to transfer the driving torque that the user applies to the pedals to the rear wheel.

In the embodiment as shown in the figures, the assembly 1 comprises a central shaft 2, which defines a longitudinal axis L and is fixedly mounted to the fork F of the bicycle to act as a pivot for pivotal movement of the hub assembly 1.

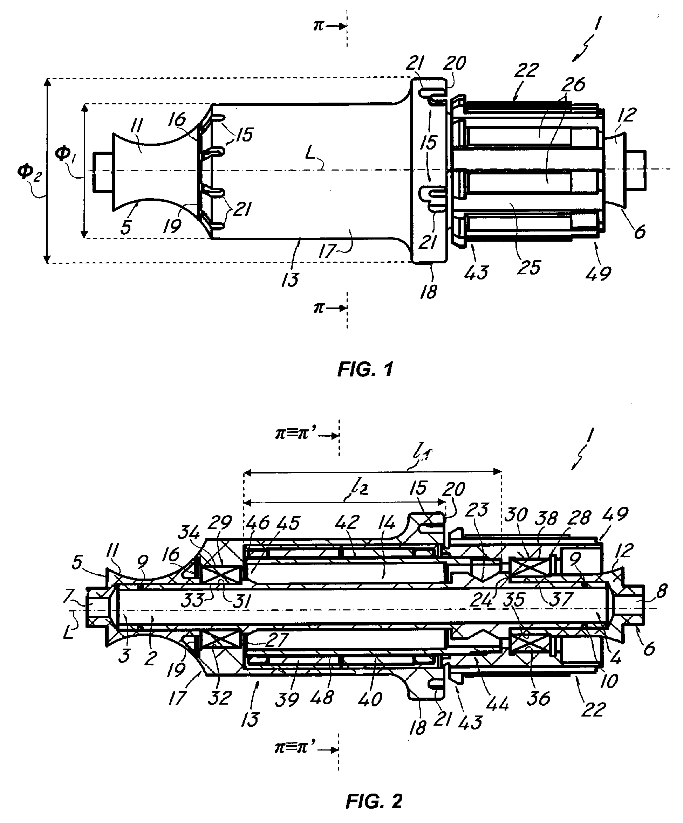

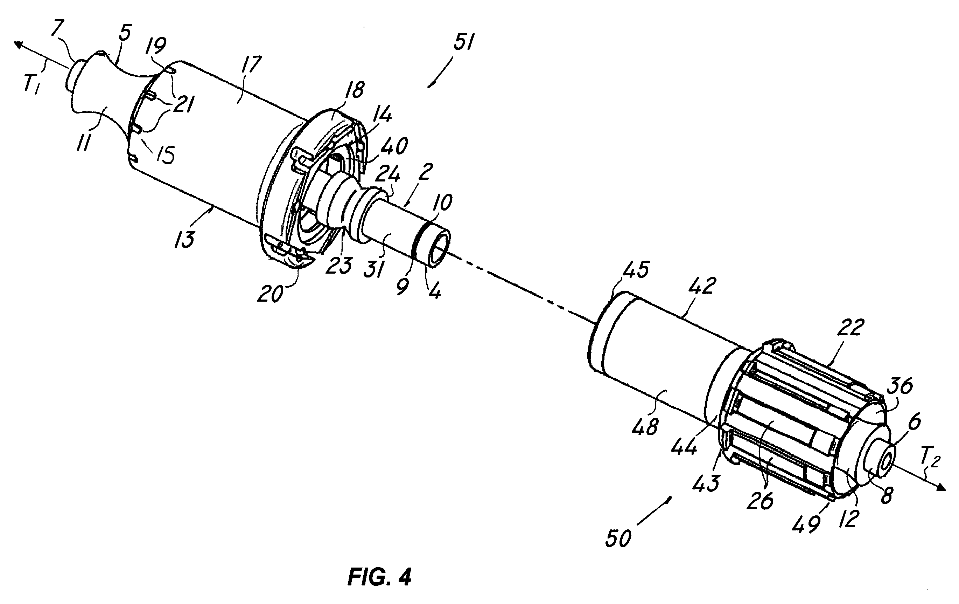

Particularly, as shown in FIGS. 1 to 4, each longitudinal end 3, 4 of the shaft 2 may be fitted with a first locking cap element 5 and a second locking cap element 6 respectively, which may be easily mounted entirely by hand, without using special tools.

Each cap element 5, 6 may have an end hole 7, 8 for a quick-connect member, not show, which is adapted to secure the hub assembly 1 to the fork F.

Furthermore, each cap element 5, 6 may be removably frictionally locked to the shaft 2 with the interposition of an elastic ring 9 held within a corresponding annular seat 10 formed proximate to each end 3, 4 of the shaft 2.

This will allow connection of the cap elements 5, 6 to their respective longitudinal ends 3, 4 of the shaft 2 without using screws or other similar fasteners.

Advantageously, the outer surfaces 11, 12 of the cap elements 5, 6 may be outwardly flared for easier grip by a user, for fitting them on and off the shaft 2.

The hub assembly 1 further comprises a hub body 13, which is pivotally mounted to the shaft 2 near one of its longitudinal ends 3 and has a substantially cylindrical inner cavity 14, as well as means 15 for connection to the wheel.

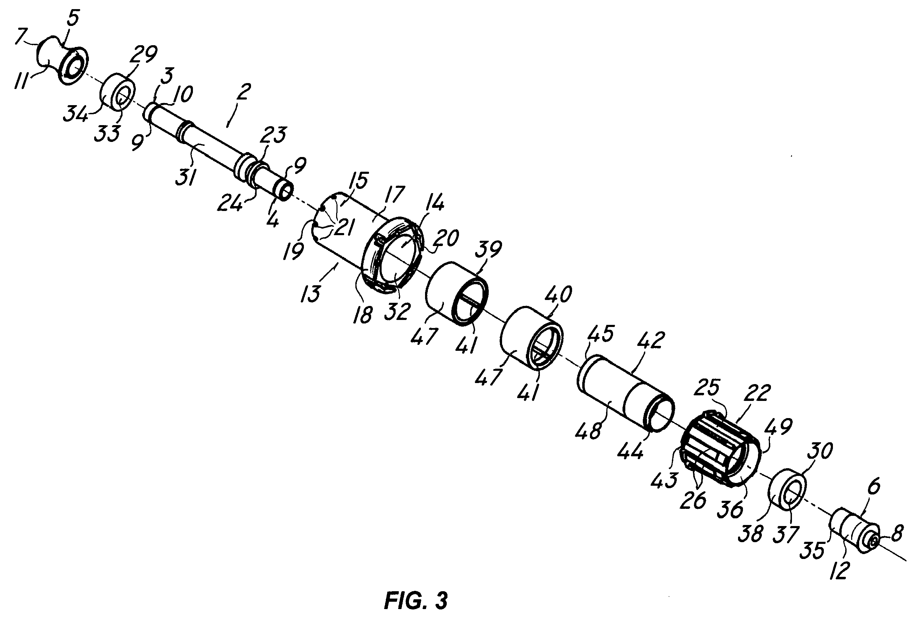

As best shown in FIGS. 1 and 3, the hub body 13 may substantially have a bell shape, with a through hole 16 for receiving the shaft 2 and communicating with the inner cavity 14.

Particularly, the hub body 13 may comprise a first cylindrical portion 17, having a first predetermined diameter Φ₁, connected to a second cylindrical portion 18 having a second predetermined diameter Φ₂ greater than the first diameter Φ₁.

As shown in FIGS. 1, 2 and 4, the first 17 and second 18 cylindrical portions have first 19 and second 20 substantially transverse circular end edges respectively.

Conveniently, the connection means 15 may comprise a plurality of radial grooves 21, as best shown in FIGS. 1, 3 and 4, formed at the first 19 and second 20 end edges, and adapted to receive the free ends of the spokes of the wheel, which are integral with the rim, not shown.

The hub body 13 may further define a transverse median plane π substantially perpendicular to the longitudinal axis L and substantially equidistant from the connection means 15.

Conveniently, the transverse median plane π defined by the hub body 13 may be substantially coincident with the main plane of extension π' of the wheel.

Also, the assembly 1 comprises a substantially tubular freehub body 22, which is pivotally mounted to the shaft 2 near the other longitudinal end 4 thereof, for a known cassette, not shown, to be mounted thereto.

Advantageously, the shaft 2 may comprise an enlarged portion 23 which, in the assembled configuration of the assembly 1 as shown in FIG. 2, projects out of the second end edge 20 of the hub body 12 into the freehub body 22.

Particularly, as best shown in FIG. 2, the enlarged portion 23 of the shaft 2 is adapted to define a substantially transverse abutment wall 24 for the cap element 6 fitted on the longitudinal end 4 of the shaft 2 at the freehub body 22.

Furthermore, as best shown in FIGS. 1, 3 and 4, the outer surface 25 of the freehub body 22 may have a plurality of radially equally spaced splines 26 for the cassette to be fitted thereupon.

The cassette may be connected via a drive chain to the chain ring of the pedal and is adapted to receive the driving torque generated by the latter to promote rotation of the hub assembly 1 and the wheel of the bicycle.

Conveniently, as shown in FIG. 2, the hub body 13 and the freehub body 22 may have inner seats 27, 28 for receiving first 29 and second 30 roller bearings 30 for pivotally supporting the shaft 2 in the proximity of its longitudinal ends 3, 4.

Particularly, the hub body 13 has an inner seat 27 for a first roller bearing 29, which is formed at the first edge 19 and the freehub body 22 has an inner seat 28 for a second roller bearing 30, which is placed substantially at its center line for abutment against the wall 24 of the enlarged portion 23, as shown in FIG. 2.

Advantageously, the outer surface 31 of the shaft 2 and the inner surface 32 of the hub body 13 interact with the inner fifth wheel 33 and the outer fifth wheel 34 of the first roller bearing 29 respectively.

Furthermore the portion 35 of the outer surface 12 of the locking element 6 placed at the hub body 22 and the inner surface 36 of the freehub body 22 interact with the inner fifth wheel 37 and the outer fifth wheel 38 of the second roller bearing 30 respectively.

Conveniently, the assembly 1 comprises at least a pair of freewheel bearings 39, 40 arranged in coaxially adjacent positions, and having one-way rollers 41.

Advantageously, these freewheel rollers 39, 40 allow disconnection between the rotation of the hub body 13 and the freehub body 22 about the shaft 2 when the user promotes pedal rotation in a direction opposite to that of the driving torque or stops pedaling.

According to a peculiar aspect of the invention, the assembly 1 comprises a cylindrical sleeve 42 which is coupled in cantilever fashion to one end of the freehub body 22 into the inner cavity 14 of the hub body 13 coaxially with the shaft

Furthermore, both freewheel bearings 39, 40 are locked in the cavity 14 of the hub body 13 in axially staggered positions relative to the freehub body 22, with the one-way rollers 41 which directly interact with the sleeve 42.

Preferably, as best shown in FIG. 2, the sleeve 42 may have a length I₁ greater than the length I₂ of the cavity 14 to define an end 44 that projects out of the second edge 20 of the hub body 13 when it is inserted in the cavity 14.

Furthermore, the sleeve 42 has an opposite end 45 inserted in the hub body 13 in the proximity of the bottom wall 46 of the cavity 14.

Advantageously, as best shown in FIG. 2, the freewheel bearings 39, 40 are axially mounted in the cavity 14 of the body 13 in substantially symmetrical positions with respect to the median plane π.

This will minimize the stresses exerted by the wheel on the freewheel bearings 39, 40 during rotation of the wheel and the hub assembly 1.

Furthermore, each of the freewheel bearings 39, 40 comprises an outer roller bearing ring 47 which is coupled by interference fit in the cavity 14 of the hub 13, as best shown in FIG. 3 and compression springs, not shown, radially acting upon the rollers 41 to maintain them constantly in contact with the outer surface 48 of the sleeve 42.

This characteristic will ensure that no clearance exists in transferring the driving torque exerted by the user on the cassette and that the operating noise is reduced.

Furthermore, the sleeve 42 may be made of steel and may undergo heat treatments for increasing resistance to wear and stresses applied thereon by the rollers 41 of the freewheel bearings 39, 40.

Conveniently, the freehub body 22 may have open longitudinal ends 43, 49 and the first end 43 may be internally threaded.

Furthermore, the sleeve 42 may have an externally threaded end 44 that can be removably coupled to the open end 43 of the freehub body 22 to form a single-unit freehub body-sleeve subassembly 50, as best shown in FIG. 2.

Particularly, the projecting end 44 of the sleeve 42 is externally threaded for removable screw coupling to the internally threaded end 43 of the freehub body 22.

Advantageously, the freehub body-sleeve subassembly 50 may be separated from the body-bearings subassembly 51, by exertion of opposite pulling forces F₁, F₂ on the cap elements 5, 6 from both longitudinal ends 3, 4 of the shaft 2.

The method of assembling the hub assembly 1, which is particularly simple and quick, includes a step of force-fitting a pair of freewheel bearings 39, 40 in the inner cavity 14 of the hub body 13 followed by a step of mounting a first roller bearing 29 in a respective seat 28 of the body 13.

This step is followed by a step of introducing the shaft 2 into the inner fifth wheel 31 of the roller bearing 29 through the through hole 16 of the hub body 13 and a step of press-fitting a first cap element 5 onto the shaft 2.

By this arrangement, the first roller bearing 29 may be mounted in the body 13 without using special tools, to form a single-unit hub body-freewheel bearings subassembly 51.

Once the first cap element 5 has been mounted, there will be a step of screw coupling the sleeve 42 to the internally threaded end 43 of the freehub body 22 to form the freehub body-sleeve subassembly 50.

The method further comprises a step of inserting the freehub body-sleeve subassembly 50 into the cavity 14 of the hub body 13 inside the freewheel bearings 39, 40 and a step of positioning the second roller bearing 30 in a corresponding seat 28 in the hub body 22.

This method comprises a step of press-fitting the second cap element 6 into locking engagement on the shaft 2 to integrate the freehub body-sleeve subassembly 50 with the hub body-freewheel bearings subassembly 51.

The method for quick maintenance of the hub assembly 1 comprises a step of pulling the second cap element 6 off the shaft 2, a step of sliding the freehub body-sleeve subassembly 50 off the hub body-freewheel bearings subassembly 51 and a step of replacing the existing freehub body-sleeve assembly 50 with a new one.

Furthermore, the quick maintenance method comprises a step of positioning the new freehub body-sleeve subassembly 50 in the hub body-freewheel bearings subassembly 51 and a last step of press-fitting the second cap element 6 to locking engagement to reassemble the full assembly 1.

The hub assembly, and the method for quick assembly and the method for quick maintenance thereof according to the invention are susceptible to a number of changes or variants, within the inventive concept disclosed in the annexed claims.

All the details thereof may be replaced by other technically equivalent parts, and the materials may vary depending on different needs, without departure from the scope of the invention.

While the assembly and methods have been described with particular reference to the accompanying figures, the numerals referred to in the disclosure and claims are only used for the sake of a better intelligibility of the invention and shall not be intended to limit the claimed scope in any manner.

### Industrial applicability

The present invention may find application in industry, because it can be produced on an industrial scale in factories for production of parts of bicycles or similar vehicles, e.g. for commercial, industrial and private purposes.

## Claims

1. A hub assembly (1) with a freewheel mechanism for a wheel of a bicycle or the like, comprising:
- a central shaft (2) defining a longitudinal axis (L);
- a hub body (13) with a substantially cylindrical inner cavity (14) and means (15) for connection to a bicycle wheel, said body (13) being pivotally mounted to said shaft (2) near one of its longitudinal ends (3, 4);
- a substantially tubular freehub body (22) pivotally mounted to said shaft (2) near the other of its longitudinal ends (3, 4);
- at least one pair of freewheel bearings (39, 40) in coaxially adjacent positions, with one-way rollers (41);
**characterized in that** it comprises a cylindrical sleeve (42) which is coupled in cantilever fashion to one end (43) of said freehub body (22) and is adapted to be fitted into said inner cavity (14) of the body (13) coaxial to said shaft (2), both freewheel bearings (39, 40) being locked in said inner cavity (14) of the hub body (13) in an axially staggered position relative to said freehub body (22), with the one-way rollers (41) directly interacting with said sleeve (42).

2. The hub assembly as claimed in claim 1, wherein said body (13) substantially has a bell shape with a through hole (16) and defines a transverse median plane (π) substantially perpendicular to said longitudinal axis (L), substantially equidistant from said connection means (15) and substantially coincident with the main plane of extension (π') of the wheel.

3. The hub assembly as claimed in claim 2, wherein said freewheel bearings (39, 40) are axially mounted in said cavity (14) of the body (13) in substantially symmetrical positions relative to said median plane (π) to minimize the stresses exerted by the wheel on said freewheel bearings (39, 40) during use.

4. The hub assembly as claimed in claim 1, wherein said freehub body (22) has both longitudinal ends (43, 49) open, one of said open ends (43) being internally threaded, said sleeve (42) having one externally threaded end (44) adapted for removable coupling with said internally threaded open end (43) of said freehub body (22) to form a single-unit freehub body-sleeve subassembly (50).

5. The hub assembly as claimed in claim 1, wherein each of said freewheel bearings (39, 40) comprises an outer roller bearing ring (47) containing the rollers (41), which is coupled by interference fit in said inner cavity (14) of the hub body (13) and compression springs radially acting upon said rollers (41) to maintain constant contact with the outer surface (48) of said sleeve (42) thereby ensuring that no clearance exists and the operation noise is reduced.

6. The hub assembly as claimed in claim 1, wherein said hub body (13) and said freehub body (22) have inner seats (27, 28) for receiving first (29) and second (30) roller bearings 30 for pivotally supporting said shaft (2) in the proximity of its longitudinal ends (3, 4).

7. The hub assembly as claimed in claim 1, wherein at each longitudinal end (3, 4) of said shaft (2) a corresponding first (5) or second (6) locking cap element (6) is fitted, without using special tools, each cap element (5, 6) having an end hole (7, 8) for a quick connection member, for securing the hub assembly (1) to a bicycle fork (F).

8. The hub assembly as claimed in claim 7, wherein each locking element (5, 6) is removably frictionally locked to said shaft (2) with the interposition of an elastic ring (9) held within an annular seat (10) in the proximity of each end (3, 4) of the shaft (2).

9. The hub assembly as claimed in claim 8, wherein the outer surface (11, 12) of said cap elements (5, 6) is outwardly flared to improve the grip for a user and allow exertion of opposite pulling forces (F₁, F₂) thereon to separate the freehub body-sleeve subassembly (50) from the body-freewheel bearings subassembly (51).

10. A method for quick mounting a hub assembly (1) as claimed in one or more of the preceding claims, comprising the following steps of:
- press-fitting said pair of freewheel bearings (39, 40) into the inner cavity (14) of the hub body (13);
- mounting a first roller bearing (29) into an inner seat )27) of said body (13);
- introducing the shaft (2) into the inner fifth wheel (31) of said first roller bearing (29) through the through hole (16) of said body (13);
- press-fitting the first cap element (3) onto the shaft (2) for locking the first roller bearing (29) without using special tools, thereby forming a single-unit hub body-freewheel bearings assembly (51);
- screw coupling the cylindrical sleeve (42) to the internally threaded end (43) of the freehub body (22) to form the freehub body-sleeve subassembly (50);
- fitting the freehub body-sleeve subassembly (50) into the cavity (14) of the body (13) inside said freewheel bearings (39, 40);
- positioning the second roller bearing (30) in a corresponding seat (28) in the hub body (22);
- press-fitting the second cap element (6) into locking engagement on the shaft (2) to integrate the freehub body-sleeve subassembly (50) with the hub body-freewheel bearings subassembly (51).

11. A method for quick maintenance of a hub assembly (1) as claimed in one or more of claims 1 to 9, comprising the steps of:
- pulling the second cap element (6) off the shaft (2);
- sliding the freehub body-sleeve subassembly (50) off the hub body-freewheel bearings assembly (51);
- replacing the existing freehub body-sleeve assembly (50) with a new one;
- placing the new freehub body-sleeve subassembly (50) in the hub body-freewheel bearings assembly (51);
- press-fitting the second cap element (6) to locking engagement to reassemble the full assembly (1).

## Patentansprüche

1. Eine Nabeneinheit (1) mit einem Freilauf-Mechanismus für ein Rad eines Fahrrads oder ähnlichem mit:
- einer zentralen Welle (2), die eine longitudinale Achse (L) bestimmt),
- einem Nabengehäuse (13) mit einem im Wesentlichen zylindrischen, inneren Hohlraum (14) und Einrichtungen (15) zum Verbinden mit einem Rad eines Fahrrads, wobei das Gehäuse (13) schwenkbar montiert ist an die Welle (2) nahe einem seiner longitudinalen Enden (3, 4),
- einem im Wesentlichen rohrförmigen Freinaben-Gehäuse (22), das schwenkbar montiert ist an die Welle (2) nahe dem anderen seiner longitudinalen Enden (3, 4),
- mindestens einem Paar Freilauf-Lagern (39, 40) in koaxial anliegenden Positionen mit Einbahn-Rollen (41),
**dadurch gekennzeichnet, dass** es eine zylindrische Hülse (42) aufweist, die in der Art eines Kragarms angekoppelt ist an ein Ende (43) des Freinaben-Gehäuses (22) und ausgelegt ist, in den inneren Hohlraum (14) des Gehäuses (13) koaxial zu der Welle (2) eingepasst zu werden, wobei beide Freilauf-Lager (39, 40) verriegelt sind in dem inneren Hohlraum (14) des Nabengehäuses (13) in einer axial gestaffelten Position in Bezug auf das Freinaben-Gehäuse (22) und mit den Einbahn-Rollen (41) in direktem Zusammenwirken mit der Hülse (42).

2. Die Nabeneinheit gemäß Anspruch 1, **dadurch gekennzeichnet, dass** das Gehäuse (13) im Wesentlichen eine Glockenform mit einem Durchgangsloch (16) aufweist und eine transversale mediane Ebene (π), die im Wesentlichen senkrecht ist zu der longitudinalen Achse (L), im Wesentlichen gleichen Abstand hat von den Verbindungseinrichtungen (15) und im Wesentlichen überein stimmt mit der Hauptebene der Erstreckung (π') des Rads.

3. Die Nabeneinheit gemäß Anspruch 2, **dadurch gekennzeichnet, dass** die Freilauf-Lager (39, 40) montiert sind in dem Hohlraum (14) des Gehäuses (13) in im Wesentlichen symmetrischen Positionen mit Bezug auf die mediane Ebene (π), um die Spannungen zu minimieren, die von dem Rad auf die Freilauf-Lager (39, 40) im Betrieb ausgeübt werden.

4. Die Nabeneinheit gemäß Anspruch 1, **dadurch gekennzeichnet, dass** das Freinaben-Gehäuse (22) an beiden Enden (43, 49) offen ist, wobei eines der offenen Enden (43) innen mit einem Gewinde versehen ist, die Hülse (42) ein Ende (44) mit äußerem Gewinde hat, das ausgelegt ist zur lösbaren Verbindung mit dem offenen Enden (43) mit einem inneren Gewinde des Freinaben-Gehäuses (22), um eine Freinaben-Gehäuse-Hülse-Unterbaugruppe (50) zu bilden.

5. Die Nabeneinheit gemäß Anspruch 1, **dadurch gekennzeichnet, dass** jedes der Freilauf-Lager (39, 40) einen äußeren Rollenlager-Ring (47) aufweist, der die Rollen (41) enthält, der durch eine Press-Passung in den inneren Hohlraum (14) des Nabengehäuses (13) eingebunden ist und Druckfedern wirken radial auf die Rollen (41), um konstante Anlage zu erhalten mit der äußeren Oberfläche (48) der Hülse (42), um so zu gewährleisten, dass kein Abstand vorhanden ist und der Betriebslärm reduziert ist.

6. Die Nabeneinheit gemäß Anspruch 1, **dadurch gekennzeichnet, dass** das Nabengehäuse (13) und das Freinaben-Gehäuse (22) innere Lager (27, 28) haben zur Aufnahme erster (29) und zweiter Rollenlager (30), um die Welle (2) schwenkbar zu halten in der Nähe seiner longitudinalen Enden (3, 4).

7. Die Nabeneinheit gemäß Anspruch 1, **dadurch gekennzeichnet, dass** an jedem longitudinalen Ende (3, 4) der Welle (2) ein entsprechendes erstes (5) oder zweites Verriegelungskappen- Element (6) angepasst ist ohne die Verwendung besonderer Werkzeuge, wobei jedes Kappen-Element (5, 6) ein Endloch (7, 8) aufweist für ein Schnellverschluss-Element, um die Nabeneinheit (1) an einer Fahrradgabel (F) zu befestigen.

8. Die Nabeneinheit gemäß Anspruch 7, **dadurch gekennzeichnet, dass** jedes Verriegelungs-Element (5, 6) lösbar über Reibung mit der Welle (2) verriegelt ist über die Zwischenschaltung eines elastischen Rings (9), der in einem ringförmigen Lager (10) in der Nähe von jedem Ende (3, 4) der Welle (2) gehalten ist.

9. Die Nabeneinheit gemäß Anspruch 8, **dadurch gekennzeichnet, dass** die äußere Oberfläche (11, 12) der Kappenelemente (5, 6) nach außen gebördelt ist, um den Griff für einen Nutzer zu verbessern und das Anlegen von entgegen gesetzten Ziehkräften (F₁, F₂) darauf zu ermöglichen, um die Freinaben-Gehäuse-Hülse-Unterbaugruppe (50) von der Gehäuse-Freilauf-Lager-Unterbaugruppe (51) zu trennen.

10. Ein Verfahren zur schnellen Montage einer Nabeneinheit (1) gemäß einem oder mehreren der vorhergehenden Ansprüche mit den folgenden Schritten:
- Press-Passen des Paars der Freilauf-Lager (39, 40) in den inneren Hohlraum (14) des Nabengehäuses (13),
- Montieren eines ersten Rollenlagers (29) in ein inneres Lager (27) des Gehäuses (13),
- Einführen der Welle (2) in das innere fünfte Rad (31) des ersten Rollenlagers (29) durch das Durchgangsloch (16) des Gehäuses (13),
- Press-Passen des ersten Kappen-Elements (3) auf die Welle (2) zum Verriegeln des ersten Rollenlagers (29) ohne die Verwendung besonderer Werkzeuge, so dass die Nabengehäuse-Freilauf-Lager-Baugruppe (51) als einzelne Einheit gebildet wird,
- Verbinden durch Schrauben der zylindrischen Hülse (42) auf das Ende (43) mit Innengewinde des Freinaben-Gehäuses (22), um die Freinaben-Gehäuse-Hülse-Unterbaugruppe (50) zu bilden,
- Einpassen der Freinaben-Gehäuse-Hülse-Unterbaugruppe (50) in den Hohlraum (14) des Gehäuses (13) in den Freilauf-Lagern (39, 40),
- Positionieren des zweiten Rollenlagers (30) in einem entsprechenden Lager (28) in dem Nabengehäuse (22),
- Press-Passen des zweiten Kappen-Elements (6) in verriegelnden Eingriff auf der Welle (2), um die Freinaben-Gehäuse-Hülse-Unterbaugruppe (50) in die Nabengehäuse-Freilauf-Lager-Baugruppe (51) zu integrieren.

11. Ein Verfahren zur schnellen Montage einer Nabeneinheit (1) gemäß einem oder mehreren der Ansprüche 1 bis 9 mit den folgenden Schritten:
- Ziehen des zweiten Kappen-Elements (6) von der Welle (2),
- Schieben der Freinaben-Gehäuse-Hülse-Unterbaugruppe (50) von der Nabengehäuse-Freilauf-Lager-Baugruppe (51),
- Ersetzen der vorhandenen Freinaben-Gehäuse-Hülse-Unterbaugruppe (50) durch eine Neue,
- Platzieren der neuen Freinaben-Gehäuse-Hülse-Unterbaugruppe (50) in der Nabengehäuse-Freilauf-Lager-Baugruppe (51),
- Press-Passen des zweiten Kappen-Elements (6) in verriegelnden Eingriff, um die gesamte Baugruppe (1) wieder zusammen zu setzen.

## Revendications

1. Ensemble moyeu (1) avec un mécanisme de roue libre pour une roue d'une bicyclette ou similaires, comprenant :
un arbre central (2) définissant un axe longitudinal (L) ;
un corps de moyeu (13) présentant une cavité interne sensiblement cylindrique (14) et des moyens (15) de liaison à une roue de bicyclette, ledit corps (13) étant monté pivotant sur ledit arbre (2) près de l'une de ses extrémités longitudinales (3, 4) ;
un corps de moyeu-roue libre (22) sensiblement tubulaire monté pivotant sur ledit arbre (2) près de l'autre de ses extrémités longitudinales (3, 4) ;
au moins une paire de roulements de roue libre (39, 40) en positions coaxialement adjacentes, avec des rouleaux unidirectionnels (41);
**caractérisé en ce qu'**il comprend un manchon cylindrique (42), couplé à porte-faux à une extrémité (43) dudit corps de moyeu-roue libre (22) et conçu pour s'insérer dans ladite cavité interne (14) du corps (13) coaxialement audit arbre (2), les deux roulements de roue libre (39, 40) étant bloqués à l'intérieur de ladite cavité interne (14) du corps de moyeu (13) dans une position axialement décalée par rapport audit corps de moyeu-roue libre (22), avec les rouleaux unidirectionnels (41) réagissant mutuellement avec ledit manchon (42).

2. Ensemble moyeu selon la revendication 1, dans lequel ledit corps (13) a sensiblement une forme à cloche avec un trou débouchant (16) et définit un plan médian transversal (π) sensiblement perpendiculaire audit axe longitudinal (L), sensiblement équidistant desdits moyens de liaison (15) et sensiblement coïncidant avec le plan principal d'étendue (π') de la roue.

3. Ensemble moyeu selon la revendication 2, dans lequel lesdits roulements de roue libre (39, 40) sont montés axialement dans ladite cavité (14) du corps (13) dans des positions sensiblement symétriques par rapport audit plan médian (π) pour minimiser les contraintes exercées par la roue sur les rouelements de roue libre (30, 40) pendant l'emploi.

4. Ensemble moyeu selon la revendication 1, dans lequel ledit corps de moyeu-roue libre (22) a ses deux extrémités longitudinales (43, 49) ouvertes, l'une desdites extrémités ouvertes (43) étant à filet intérieur, ledit manchon (42) présentant une extrémité à filet extérieur (44) conçue pour s'accoupler de façon amovible avec ladite extrémité ouverte à filet intérieur (43) dudit corps de moyeu-roue libre (22) pour former un sous-ensemble manchon de corps de moyeu-roue libre unitaire.

5. Ensemble moyeu selon la revendication 1, dans lequel chacun desdits roulements de roue libre (39, 40) comprend une bague à rouleaux (47) contenant des rouleaux (41), ajustés avec serrage dans ladite cavité interne (14) du corps de moyeu (13) et des ressorts de compression agissant radialement sur lesdits rouleaux (41) pour maintenir un contact constant avec la surface extérieure (48) dudit manchon (42) et assurer de cette façon l'absence de jeu et une réduction des bruits de fonctionnement.

6. Ensemble moyeu selon la revendication 1, dans lequel ledit corps de moyeu(13) et ledit corps de moyeu-roue libre (22) présentent des sièges internes (27, 28) pour recevoir un premier (29) et un second (30) roulement à rouleaux (30) pour supporter de façon pivotante ledit arbre (2) à proximité de ses extrémités longitudinales (3, 4).

7. Ensemble moyeu selon la revendication 1 dans lequel, à chaqueextrémité longitudinale (3, 4) dudit arbre (2) un premier (5) ou un second (6) élément de blocage à capuchon correspondant est appliqué, sans l'emploi d'outils spéciaux, chaque élément à capuchon (5, 6) comportant un trou d'extrémité (7, 8) pour un organe de raccord rapide, destiné à ancrer l'ensemble moyeu (1) à une fourche de bicyclette (F).

8. Ensemble moyeu selon la revendication 7 dans lequel, chaqueélément de blocage (5, 6) est bloqué à friction de façon amovible sur ledit arbre (2) avec l'interposition d'une bague élastique (9) retenue dans un siège annulaire (10) à proximité de chaque extrémité (3, 4) de l'arbre (2).

9. Ensemble moyeu selon la revendication 8 dans lequel lasurface extérieure (11, 12) desdits éléments à capuchon (5, 6) est évasée vers l'extérieur pour faciliter la prise par un utilisateur et permettre d'exercer des forces de traction opposées (F1, F2) sur celle-ci afin de séparer le sous-ensemble corps de moyeu-roue libre - manchon (50) du sous-ensemble corps - roulements de roue libre (51).

10. Procédé de montage rapide d'un ensemble moyeu (1) selon une ou plusieurs des revendications précédentes, comprenant les étapes suivantes :
emboîter ladite paire de roulements de roue libre (39, 40) dans la cavité interne (14) du corps de moyeu (13) ;
monter un premier roulement à rouleaux (29) dans un siège interne (27) duditcorps (13) ;
introduire l'arbre dans la crapaudine interne (31) dudit premier roulement à rouleaux (29) à travers le trou débouchant (16) dudit corps (13) ;
monter à pression le premier élément à capuchon (3) sur l'arbre (2) pour bloquer le premier roulement à rouleaux (29) sans utiliser aucun outil spécial, de manière à former un ensemble unitaire corps de moyeu-roulements de roue libre (51) ;
visser le manchon cylindrique (42) à l'extrémité à filet intérieur (43) du corps de moyeu-roue libre (22) pour former un sous-ensemble corps de moyeu-roue libre - manchon (50) ;
insérer le sous-ensemble corps de moyeu-roue libre - manchon (50) dans la cavité (14) du corps (13) à l'intérieur desdits roulements de roue libre (39, 40) ;
- positionner le second roulement a rouleaux (30) dans un siège correspondant (28) dans le corps de moyeu (22) ;
- monter à pression le second élément à capuchon (6) pour l'engager de façon bloquée sur l'arbre (2) afin d'intégrer le sous-ensemble corps de moyeu-roue libre - manchon (50) avec le sous-ensemble corps de moyeu - roulements de roue libre (51).

11. Procédé d'entretien rapide d'un ensemble moyeu (1) selonune ou plusieurs des revendications 1 à 9, comprenant les étapes suivantes :
- extraire le second élément à capuchon (6) de l'arbre (2) ;
- déboîter le sous-ensemble corps de moyeu-roue libre (50) du sous-ensemble corps de moyeu - roulements de roue libre (51) ;
- remplacer l'ensemble corps de moyeu-roue libre (50) existant avec un ensemble nouveau ;
- placer le nouveau sous-ensemble corps de moyeu-roue libre (50) dans le sous-ensemble corps de moyeu - roulements de roue libre (51) ;
- bloquer à pression le second élément à capuchon (6) pour l'engager de façon bloquée afin de réassembler l'ensemble (1) entier.
